# EUROPEAN PATENT APPLICATION

(11) **EP 4 629 022 A1**
(43) Date of publication of application: **08.10.2025**
(21) Application number: 23914938.8
(22) Date of filing: 14.11.2023
(51) Int. Cl.: G06F 1/16

(54) **ELECTRONIC DEVICE COMPRISING FLEXIBLE DISPLAY**

(30) Priority: 04.01.2023 KR 20230001128; 07.02.2023 KR 20230016435
(71) Applicant: Samsung Electronics Co., Ltd., Suwon-si, Gyeonggi-do 16677 (KR)
(72) Inventor: KIM, Hyeonhak, Suwon-si Gyeonggi-do 16677 (KR); AN, Jungchul, Suwon-si Gyeonggi-do 16677 (KR); KWON, Kihwan, Suwon-si Gyeonggi-do 16677 (KR)
(74) Representative: HGF
(86) International application number: PCT/KR2023/018291
(87) International publication number: WO 2024/147474

(57) **Abstract**

An electronic device according to one embodiment comprises: a flexible display; a first housing; a second housing that can rotate relative to the first housing; a hinge structure including a first hinge plate and a second hinge plate; a reinforcement member; a flexible printed circuit board; and a protective layer which, in an unfolded state, is parallel to the boundary between the first and second housings and surrounds a portion of the hinge structure. The rotation angle range of the first hinge plate and the second hinge plate is greater than the rotation angle range of the first housing and the second housing. Various other embodiments may be possible.

## Description

### [Technical Field]

The following descriptions relate to an electronic device comprising a flexible display.

### [Background Art]

An electronic device including a large-screen display may increase usability of a user. As a demand for a highly portable electronic device increases, the electronic device may include a deformable display. The deformable display may be slidably deformable or foldably deformable. For example, the electronic device may include a plurality of housings that may rotate with each other through a hinge structure.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a flexible display, a first housing, a second housing, a hinge structure, a stiffener, a flexible printed circuit board, and a protective layer. The flexible display may include a first display region, a second display region, and a third display region. The third display region may be positioned between the first display region and the second display region. The first housing may support the first display region. The first housing may be disposed below the first display region. The second housing may be configured to be rotatable with respect to the first housing based on a folding axis. The second housing may support the second display region. The second housing may be disposed below the second display region. The hinge structure may include a first hinge plate and a second hinge plate. The first hinge plate and the second hinge plate may be disposed along a boundary between the first housing and the second housing. The hinge structure may be disposed below the third display region. The stiffener may support the third display region. The stiffener may be disposed between the hinge structure and the third display region. The flexible printed circuit board, FPCB, may extend from a first printed circuit board, PCB, in the first housing, passing through the hinge structure, to a second PCB in the second housing. The protective layer, parallel to the boundary, may surround a portion of the first hinge plate adjacent to the second hinge plate, in an unfolded state in which a first direction where the first display region faces and a second direction where the second display region faces correspond to each other. A rotation angle range of the first hinge plate and the second hinge plate may be greater than a rotation angle range of the first housing and the second housing.

According to an embodiment, an electronic device may comprise a flexible display, a first housing, a second housing, a hinge structure, a flexible printed circuit board, a first protective layer, and a second protective layer. The flexible display may include a first display region, a second display region, and a third display region. The third display region may be positioned between the first display region and the second display region. The first housing may be disposed below the first display region. The second housing may be configured to be rotatable with respect to the first housing based on a folding axis. The second housing may be disposed below the second display region. The hinge structure may include a first hinge plate and a second hinge plate. The first hinge plate and the second hinge plate may be disposed along a boundary between the first housing and the second housing. The hinge structure may be disposed below the third display region. The flexible printed circuit board, FPCB, may extend from a first printed circuit board, PCB, in the first housing, passing through the hinge structure, to a second PCB in the second housing. The first protective layer, parallel to the boundary, may surround a portion of the first hinge plate adjacent to the second hinge plate, in an unfolded state in which a first direction where the first display region faces and a second direction where the second display region faces correspond to each other. The second protective layer may surround a portion of the second hinge plate, parallel to the boundary, adjacent to the first hinge plate, in the unfolded state. The second hinge plate may be inclined with respect to the first hinge plate in a folded state in which the first direction and the second direction are opposite to each other.

### [Description of the Drawings]

FIG. 1 is a block diagram of an electronic device in a network environment according to an embodiment.
FIG. 2A illustrates an unfolded state of an exemplary electronic device.
FIG. 2B illustrates a folded state of an exemplary electronic device.
FIG. 3A illustrates an exemplary electronic device in which a flexible display is omitted in an unfolded state.
FIG. 3B is an exemplary enlarged view of a portion X of FIG. 3A in which a hinge plate is omitted.
FIG. 4 schematically illustrates a cross-sectional view of an exemplary electronic device cut along line A-A' of FIG. 3A.
FIG. 5A is a cross-sectional view of an exemplary electronic device in an unfolded state.
FIG. 5B is a cross-sectional view of an exemplary electronic device in a folded state.
FIG. 5C is an exploded view of a hinge structure of an exemplary electronic device.
FIG. 6 illustrates an exemplary protective layer in a state before being attached to a hinge plate.
FIG. 7 illustrates a process of attaching a protective layer of an exemplary electronic device to a hinge plate.
FIG. 8 schematically illustrates a cross-sectional view of an exemplary electronic device cut along line B-B' of FIG. 3A.
FIG. 9 illustrates a stiffener disposed in an exemplary electronic device from which a flexible display is omitted in an unfolded state.
FIG. 10A schematically illustrates a cross-sectional view of an exemplary electronic device cut along line C-C' of FIG. 9.
FIG. 10B schematically illustrates a cross-sectional view of an exemplary electronic device cut along line D-D' of FIG. 9.

### [Mode for Invention]

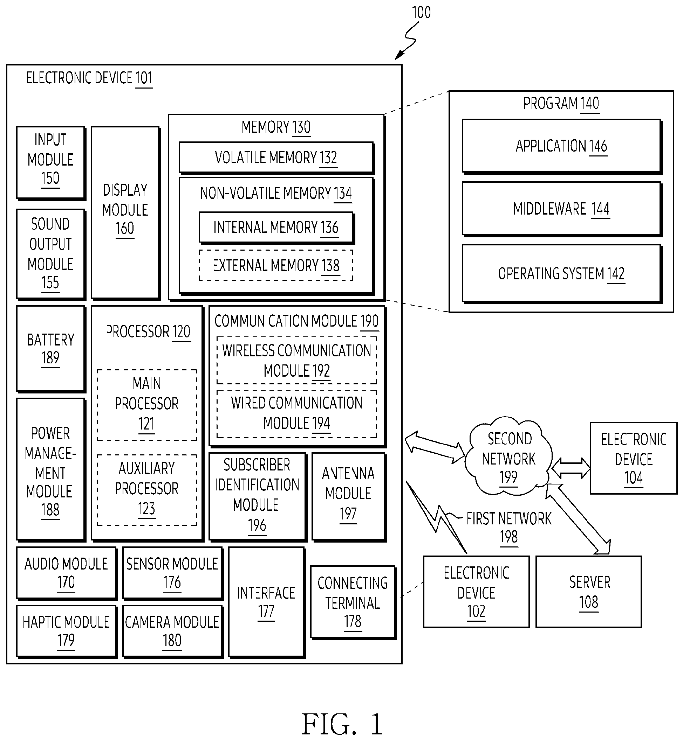

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

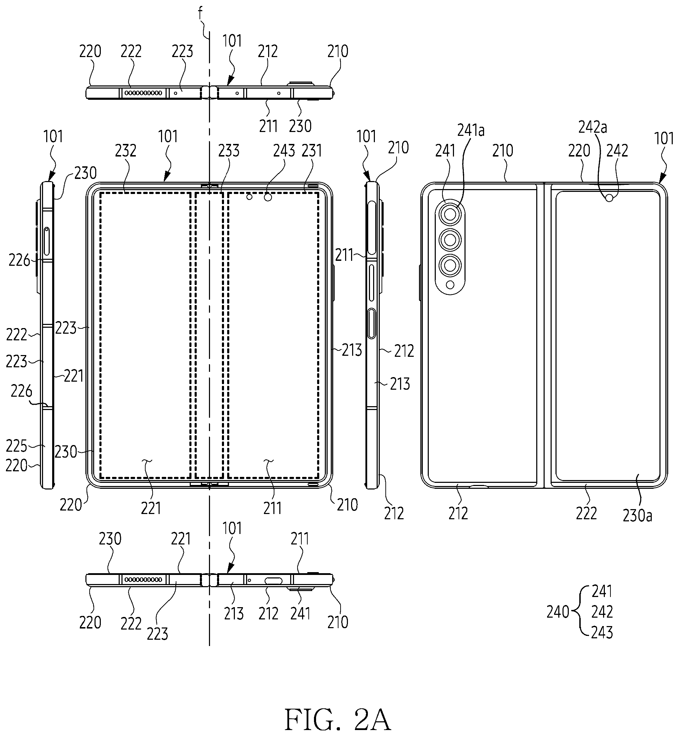

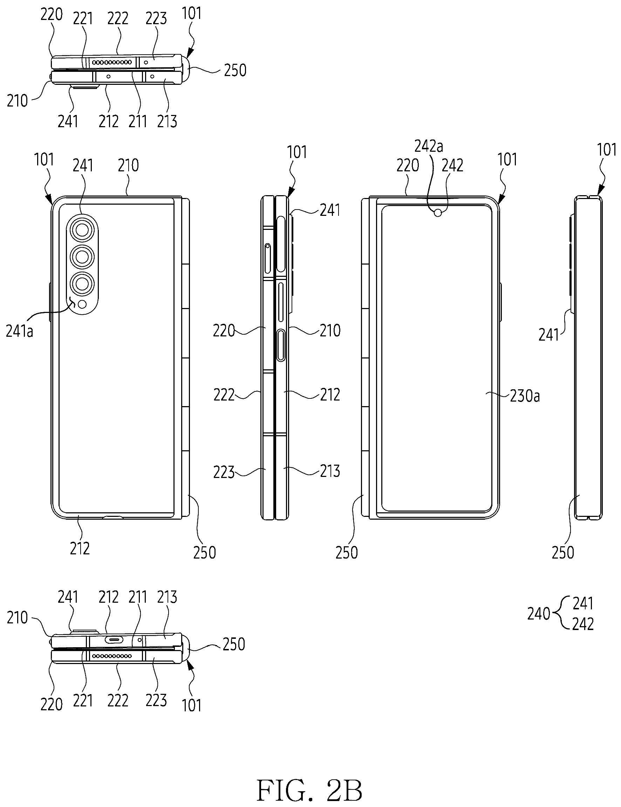

FIG. 2A illustrates an unfolded state of an exemplary electronic device. FIG. 2B illustrates a folded state of an exemplary electronic device.

Referring to FIGS. 2A and 2B, the electronic device (e.g., the electronic device 101 of FIG. 1) may include a first housing 210, a second housing 220, a flexible display 230 (e.g., the display module 160 of FIG. 1), and a hinge structure 250.

According to an embodiment, the first housing 210 and the second housing 220 may form at least a portion of an outer surface of the electronic device 101. At least a portion of the outer surface of the electronic device 101 defined by the first housing 210 and the second housing 220 may be in contact with a portion of a body of a user when the electronic device 101 is used by the user. According to an embodiment, the first housing 210 may include a first surface 211, a second surface 212 opposite the first surface 211, and a first side surface 213 surrounding at least a portion of the first surface 211 and the second surface 212. The first side surface 213 may connect a periphery of the first surface 211 to a periphery of the second surface 212. The first surface 211, the second surface 212, and the first side surface 213 may define an inner space of the first housing 210. According to an embodiment, the first housing 210 may provide a space formed by the first surface 211, the second surface 212, and the first side surface 213 as a space for disposing components of the electronic device 101.

According to an embodiment, the second housing 220 may include a third surface 221, a fourth surface 222 opposite the third surface 221, and a second side surface 223 surrounding at least a portion of the third surface 221 and the fourth surface 222. The second side surface 223 may connect a periphery of the third surface 221 to a periphery of the fourth surface 222. The third surface 221, the fourth surface 222, and the second side surface 223 may define an inner space of the second housing 220. According to an embodiment, the second housing 220 may provide a space formed by the third surface 221, the fourth surface 222, and the second side surface 223 surrounding at least a portion of the third surface 221 and the fourth surface 222 as a space for mounting components of the electronic device 101. According to an embodiment, the second housing 220 may be coupled to the first housing 210 to be rotatable with respect to the first housing 210.

According to an embodiment, the first side surface 213 and the second side surface 223 may include a conductive portion 225 and a non-conductive portion 226. According to an embodiment, the conductive portion 225 may operate as an antenna radiator. The electronic device 101 may be capable of communicating with an external electronic device using the antenna radiator formed by the conductive portion 225.

According to an embodiment, the flexible display 230 may be configured to display visual information. According to an embodiment, the flexible display 230 may be disposed on the first surface 211 of the first housing 210, the third surface 221 of the second housing 220, and the hinge structure 250. For example, the flexible display 230 may include a first display region 231 disposed on the first surface 211 of the first housing, a second display region 232 disposed on the third surface 221 of the second housing, and a third display region 233 disposed between the first display region 231 and the second display region 232. The third display region 233 may be disposed on the hinge structure 250. The first display region 231, the second display region 232, and the third display region 233 may form a front surface of the flexible display 230. According to an embodiment, the flexible display 230 may further include a sub-display panel 230a disposed on the fourth surface 222 of the second housing 220. According to an embodiment, the flexible display 230 may include a window exposed toward the outside of the electronic device 101. The window may protect a surface of the flexible display 230 and transmit visual information provided by the flexible display 230 to the outside of the electronic device 101, by including a substantially transparent material. For example, the window may include glass (e.g., ultra-thin glass (UTG)) and/or polymer (e.g., polyimide (PI)), but is not limited thereto.

According to an embodiment, at least one camera 240 may be configured to obtain an image based on receiving light from a subject outside of the electronic device 101. According to an embodiment, the at least one camera 240 may include first cameras 241, a second camera 242, and a third camera 243. The first cameras 241 may be disposed in the first housing 210. For example, the first cameras 241 may be disposed inside the first housing 210. At least some of the first cameras 241 may be visible through the second surface 212 of the first housing 210. The first cameras 241 may be supported by a bracket (not illustrated) in the first housing 210. The first housing 210 may include at least one opening 241a overlapping the first cameras 241 when the electronic device 101 is viewed from above. The first cameras 241 may obtain an image based on receiving light from the outside of the electronic device 101 through the at least one opening 241a.

According to an embodiment, the second camera 242 may be disposed in the second housing 220. For example, the second camera 242 may be disposed inside the second housing 220. The second camera 242 may be visible through the sub-display panel 230a. The second housing 220 may include at least one opening 242a overlapping the second camera 242 when the electronic device 101 is viewed from above. The second camera 242 may obtain an image based on receiving light from the outside of the electronic device 101 through the at least one opening 242a.

According to an embodiment, the third camera 243 may be disposed in the first housing 210. For example, the third camera 243 may be disposed inside the first housing 210, and at least a portion may be visible through the first surface 211 of the first housing 210. For another example, the third camera 243 may be disposed inside the first housing 210, and at least a portion of the third camera 243 may be visible through the first display region 231 of the flexible display 230. The first display region 231 of the flexible display 230 may include at least one opening overlapping the third camera 243 when the flexible display 230 is viewed from above. The third camera 243 may obtain an image based on receiving light from the outside of the flexible display 230 through the at least one opening.

According to an embodiment, the second camera 242 and the third camera 243 may be disposed below (e.g., a direction toward the inside of the first housing 210 or the inside of the second housing 220) the flexible display 230. For example, the second camera 242 and the third camera 243 may be an under display camera (UDC). In a case that the second camera 242 and the third camera 243 are the under-display camera, a region of the flexible display 230 corresponding to positions of each of the second camera 242 and the third camera 243 may not be an inactive region. The inactive region of the flexible display 230 may mean a region of the flexible display 230 that does not include pixels or does not emit light to the outside of the electronic device 101. For another example, the second camera 242 and the third camera 243 may be a punch hole camera. In a case that the second camera 242 and the third camera 243 are the punch hole camera, a region of the flexible display 230 corresponding to the positions of each of the second camera 242 and the third camera 243 may be the inactive region.

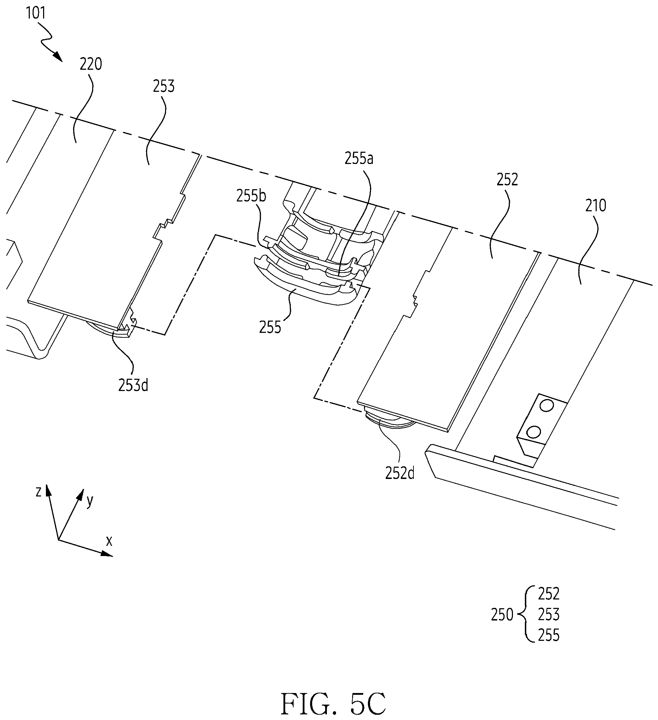

According to an embodiment, the hinge structure 250 may rotatably connect the first housing 210 and the second housing 220. The hinge structure 250 may be disposed between the first housing 210 and the second housing 220 of the electronic device 101 such that the electronic device 101 may be curved, bent, or folded. For example, the hinge structure 250 may be disposed between a portion of the first side surface 213 and a portion of the second side surface 223. The hinge structure 250 may change the electronic device 101 into an unfolded state in which directions the first display region 231 and the second display region 232 face are the same or a folded state in which directions the first display region 231 and the second display region 232 face are opposite to each other. When the electronic device 101 is in the folded state, the first housing 210 and the second housing 220 may be covered or overlapped by being disposed parallel to each other. The hinge structure 250 will be exemplified through FIG. 5C.

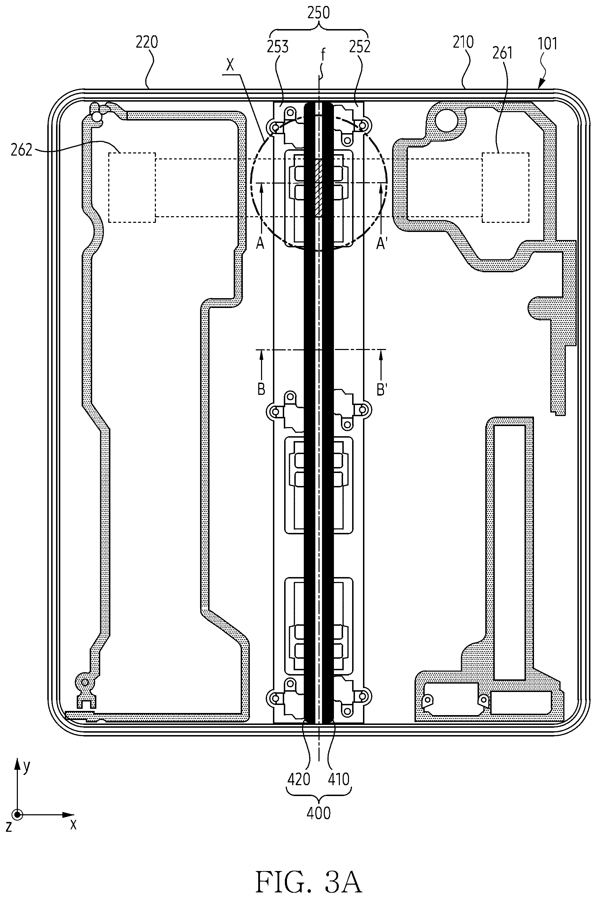

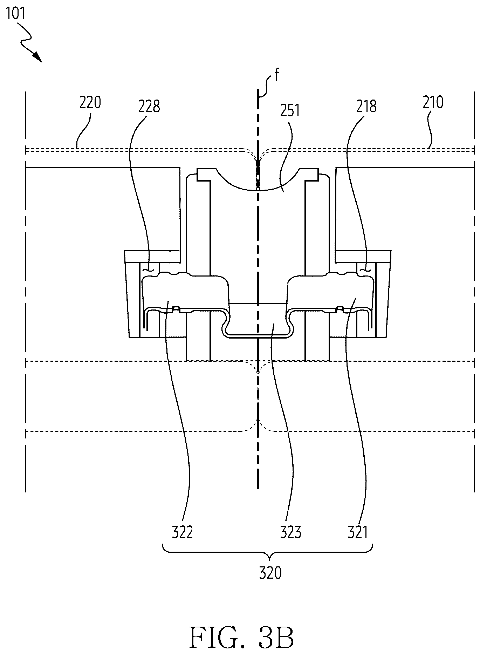

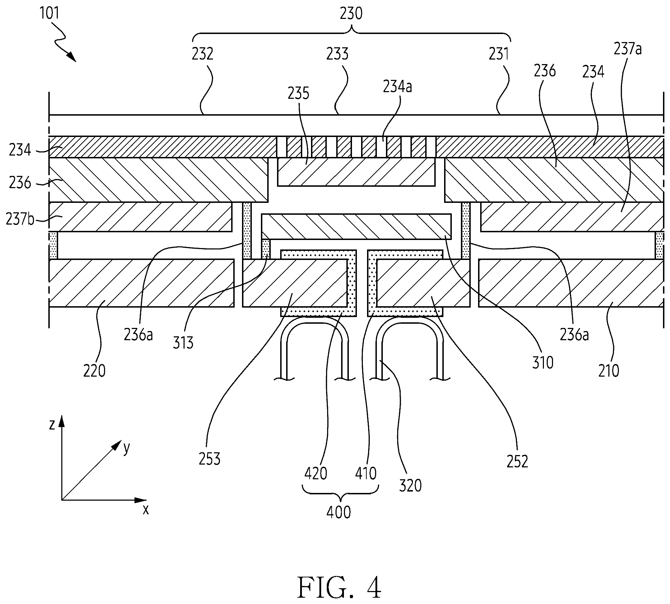

FIG. 3A illustrates an exemplary electronic device in which a flexible display is omitted in an unfolded state. FIG. 3B is an exemplary enlarged view of a portion X of FIG. 3A in which hinge plates are omitted. FIG. 4 schematically illustrates a cross-sectional view of an exemplary electronic device cut along line A-A' of FIG. 3A.

Referring to FIGS. 3A, 3B, and 4, an electronic device 101 according to an embodiment may include a first housing 210, a second housing 220, a flexible display 230, a hinge structure 250, a flexible printed circuit board 320, a stiffener (e.g., a stiffener 310 of FIG. 4), and/or a protective layer 400.

The electronic device 101 according to an embodiment may include the first housing 210 and the second housing 220 rotatably coupled to each other. The hinge structure 250 disposed between the first housing 210 and the second housing 220 may rotatably couple the first housing 210 and the second housing 220. For example, the second housing 220 may be configured to be rotatable with respect to the first housing 210 based on a folding axis f. Although omitted in FIGS. 3A and 3B, referring to FIG. 2A, a flexible display (e.g., the flexible display 230 of FIG. 2A) may include a first display region (e.g., the first display region 231 of FIG. 2A) disposed on the first housing 210, a second display region (e.g., the second display region 232 of FIG. 2A) disposed on the second housing 220, and a third display region (e.g., the third display region 233 of FIG. 2A) between the first display region 231 and the second display region 232. The third display region 233 may be disposed on the hinge structure 250. The flexible display 230 may be configured to provide a plurality of states including an unfolded state in which a first direction the first display region 231 faces and a second direction the second display region 232 faces correspond to each other, and a folded state in which the first direction and the second direction are opposite to each other.

According to an embodiment, the hinge structure 250 may include a first hinge plate 252 and a second hinge plate 253. The hinge structure 250 may be disposed below (e.g., a -z direction) the third display region (e.g., the third display region 233 of FIG. 2A) of the flexible display 230. The first hinge plate 252 and the second hinge plate 253 may be positioned along a boundary between the first housing 210 and the second housing 220. For example, the first hinge plate 252 may be positioned along a boundary of the first housing 210 adjacent to the second housing 220. The second hinge plate 253 may be positioned along a boundary of the second housing 220 adjacent to the first housing 210.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to the first housing 210. The second hinge plate 253 may be coupled to the second housing 220. The first housing 210 and the second housing 220 may be rotatable according to rotation of the first hinge plate 252 and the second hinge plate 253.

According to an embodiment, the first hinge plate 252 and the second hinge plate 253 may be rotatably connected to a hinge bracket (e.g., a hinge bracket 255 of FIG. 5C). When a user applies an external force to fold or unfold the electronic device 101, the first housing 210 and the second housing 220 may be folded or unfolded to each other through a rotational motion of the first hinge plate 252 and the second hinge plate 253. Since the first housing 210 and the second housing 220 may be symmetrical with the hinge structure 250 interposed therebetween, a description of the first hinge plate 252 may be equally applied to the second hinge plate 253.

According to an embodiment, the flexible printed circuit board 320 may electrically connect a first printed circuit board 261 in the first housing 210 and a second printed circuit board 262 in the second housing 220. According to an embodiment, the first printed circuit board 261 and the second printed circuit board 262 may be configured to provide an electrical connection of electronic components in the electronic device 101. For example, the first printed circuit board 261 may provide an electrical connection for a plurality of electronic components (e.g., the processor 120 of FIG. 1) disposed in the first housing 210. For example, the second printed circuit board 262 may provide an electrical connection for a plurality of electronic components (e.g., a sub-display panel (e.g., the sub-display panel 230a of FIG. 2A)) disposed in the second housing 220. Since the first housing 210 and the second housing 220 are connected through the hinge structure 250, they may not be integrally formed and may have a structure separated from each other. For an electrical connection between the electronic components in the first housing 210 and the electronic components in the second housing 220, the flexible printed circuit board 320 may electrically connect the first printed circuit board 261 and the second printed circuit board 262. The flexible printed circuit board 320 may include a plurality of conductive layers and a plurality of non-conductive layers alternately laminated with the plurality of conductive layers. The flexible printed circuit board 320 may provide the electrical connection between the first printed circuit board 261 and the second printed circuit board 262 by using wirings and conductive vias formed in the conductive layers.

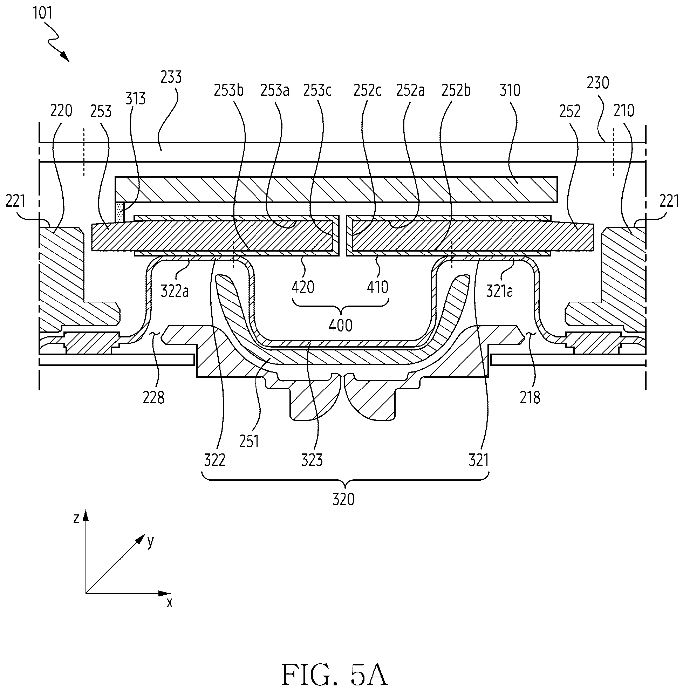

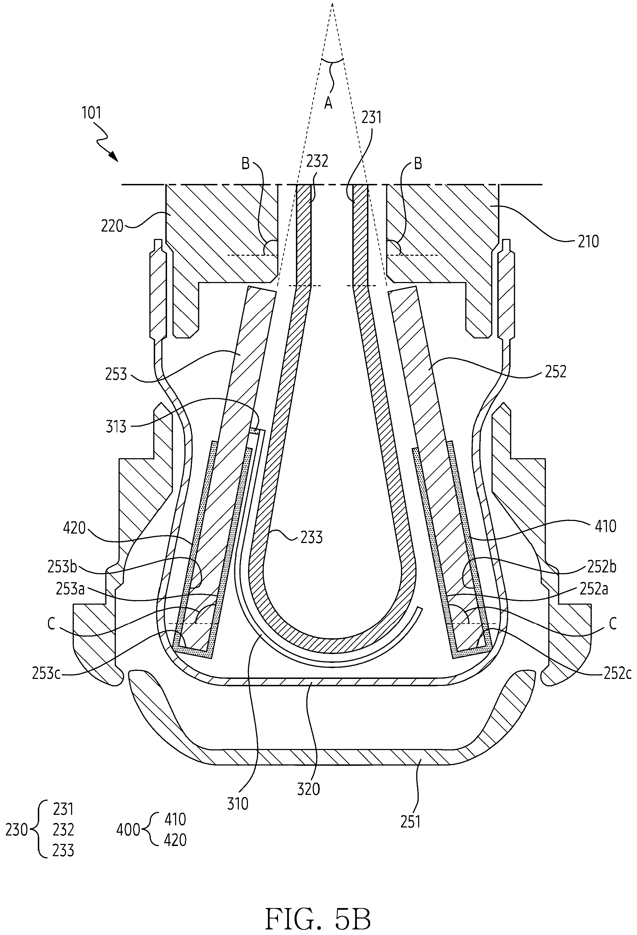

Referring to FIG. 3B, the flexible printed circuit board 320 may extend from the inside of the first housing 210, passing through the hinge structure 250, to the inside of the second housing 220. For example, the flexible printed circuit board 320 may extend from the inside of the first housing 210 to the hinge structure 250 through a first opening 218. The flexible printed circuit board 320 may extend from the hinge structure 250 to the inside of the second housing 220 through a second opening 228. The flexible printed circuit board 320 may include a first portion 321, a second portion 322, and a third portion 323 in the unfolded state. The first portion 321 may extend from the inside of the first housing 210 to a hinge cover 251 through the first opening 218. The second portion 322 may extend from the inside of the second housing 220 to the hinge cover 251 through the second opening 228. The third portion 323 may be disposed between the first portion 321 and the second portion 322, and may extend along the hinge cover 251. A detailed structure of the flexible printed circuit board 320 in the unfolded state will be exemplified through FIGS. 5A and 5B.

According to an embodiment, as a portion of the flexible printed circuit board 320 passes through the hinge structure 250, the portion of the flexible printed circuit board 320 may be disposed below (e.g., the -z direction) the first hinge plate (e.g., the first hinge plate 252 of FIG. 3A) and the second hinge plate (e.g., the second hinge plate 253 of FIG. 3A). Since the portion of the flexible printed circuit board 320 is disposed below the first hinge plate 252 and the second hinge plate 253, the first hinge plate 252 and/or the second hinge plate 253 may contact the flexible printed circuit board 320 when a state of the electronic device 101 changes. For example, when the state of the electronic device 101 changes from the folded state to the unfolded state, a lower surface of the first hinge plate 252 and/or the second hinge plate 253 may contact the flexible printed circuit board 320. As the state of the electronic device 101 changes repeatedly, the flexible printed circuit board 320, the first hinge plate 252, and/or the second hinge plate 253 may be damaged or worn by the contact. The damage or the wear may generate noise due to a physical interaction of a contact surface when the folded/unfolded state of the electronic device 101 is changed.

Referring to FIG. 4, the stiffener 310 may support the third display region 233. The stiffener 310 omitted in FIG. 3A may be disposed between the hinge structure 250 and the third display region 233. For example, the stiffener 310 may be disposed by at least partially overlapping the first hinge plate 252 and the second hinge plate 253.

For example, the electronic device 101 may include a first support plate 234 disposed below the flexible display 230. The first support plate 234 may provide rigidity to the flexible display 230 by supporting the flexible display 230. For example, the first support plate 234 may be a metal sheet, but is not limited thereto. Since the third display region 233 of the flexible display 230 may be curved in the folded state, a portion of the first support plate 234 corresponding to the third display region 233 may have a lattice structure 234a including a plurality of openings and/or a plurality of recesses. When the electronic device 101 is in the folded state, a portion of the first support plate 234 corresponding to the third display region 233 may be curved by using the lattice structure 234a.

According to an embodiment, in the unfolded state, the first display region 231 and the second display region 232 may be configured to receive a user input. For example, the electronic device 101 may include an electromagnetic induction panel 236 disposed below the first display region 231 and the second display region 232. For example, at least a portion of the electromagnetic induction panel 236 may be attached to the first hinge plate 252 and/or the second hinge plate 253 to support at least a portion (e.g., at least a portion of the third display region 233) of the flexible display 230. For example, at least a portion of the electromagnetic induction panel 236 may be attached to the first hinge plate 252 and/or the second hinge plate 253 through a support tape 236a, but is not limited thereto. The electromagnetic induction panel 236 may be configured to receive an input from an external electronic device. For example, the external electronic device may be referred to as an electronic pen or a stylus pen configured to provide a touch input through the electromagnetic induction panel 236, but is not limited thereto. The electromagnetic induction panel 236 may be configured to receive a hovering input or a touch input for the first display region 231 and/or the second display region 232. For example, the electromagnetic induction panel 236 may be referred to as an electromagnetic resonance (EMR) panel and/or a digitizer. The electromagnetic induction panel 236 may include a conductive pattern forming at least one closed loop. The conductive pattern may receive an electromagnetic signal from the external electronic device (e.g., a stylus pen). Since the third display region 233 is curved in the folded state, the electromagnetic induction panel 236 may be omitted from a region corresponding to the third display region 233. A protective plate 235 for supporting the third display region 233 may be disposed in the region corresponding to the third display region 233. For example, the protective plate 235 may include a thermoplastic polyurethane (TPU) material, but is not limited thereto.

The electronic device 101 according to an embodiment may include a second support plate 237a and a third plate for supporting a portion of the flexible display 230. The second support plate 237a may be disposed below the first display region 231. A third support plate 237b may be disposed below the second display region 232. For example, the second support plate 237a may be disposed below the electromagnetic induction panel 236 corresponding to the first display region 231. The third support plate 237b may be disposed below the electromagnetic induction panel 236 corresponding to the second display region 232. The second support plate 237a and the third support plate 237b may provide rigidity to the first display region 231 and the second display region 232 in the unfolded state.

According to an embodiment, the second support plate 237a and the third support plate 237b may be rigid to support the first display region 231 and the second display region 232. Since the third display region 233 curves in the folded state, the second support plate 237a and the third support plate 237b may be spaced apart from each other with a region corresponding to the third display region 233 interposed therebetween. As the second support plate 237a and the third support plate 237b are spaced apart from each other, a step may be formed between the second support plate 237a and the third support plate 237b. According to an embodiment, the stiffener 310 may be configured to compensate for the step and provide rigidity to the third display region 233. For example, the stiffener 310 may be a sheet including stainless steel, but is not limited thereto.

According to an embodiment, the stiffener 310 may be attached to any one of the first hinge plate 252 and the second hinge plate 253. For example, a portion of the stiffener 310 may be attached to the second hinge plate 253 through an adhesive tape 313. In the unfolded state, the stiffener 310 may support the third display region 233 by maintaining a flat shape. In the unfolded state, the stiffener 310 may be curved. Since the stiffener 310 is attached to any one of the first hinge plate 252 and the second hinge plate 253, the stiffener 310 may be curved without being elongated. For example, in a case that the stiffener 310 is attached to the first hinge plate 252, the stiffener 310 may be curved while moving along the first hinge plate 252 as the electronic device 101 changes from the folded state to the unfolded state. Since the stiffener 310 is disposed above the first hinge plate 252 and the second hinge plate 253, the first hinge plate 252 and/or the second hinge plate 253 may contact the stiffener 310 when the state of the electronic device 101 changes. For example, when the state of the electronic device 101 changes from the folded state to the unfolded state, an upper surface of the first hinge plate 252 and/or the second hinge plate 253 may contact the flexible printed circuit board 320. As the state of the electronic device 101 changes repeatedly, the stiffener 310, the first hinge plate 252, and/or the second hinge plate 253 may be damaged or worn by the contact. The damage or the wear may generate noise due to a physical interaction of a contact surface when the folded/unfolded state of the electronic device 101 is changed.

Referring to FIG. 4, the protective layer 400 may surround a portion of the first hinge plate 252 and a portion of the second hinge plate 253. For example, the protective layer 400 may be a protective film surrounding a portion of the hinge plates 252 and 253, but is not limited thereto. For example, the protective layer 400 may include a first protective layer 410 surrounding a portion of the first hinge plate 252 and/or a second protective layer 420 surrounding a portion of the second hinge plate 253. The protective layer 400 may be configured to separate the first hinge plate 252 and the second hinge plate 253 from the stiffener 310 and/or the flexible printed circuit board 320 when the state of the electronic device 101 changes. For example, the protective layer 400 may reduce contact between the stiffener 310 and the first hinge plate 252 by surrounding a space between the stiffener 310 and the first hinge plate 252. For example, the protective layer 400 may reduce contact between the flexible printed circuit board 320 and the first hinge plate 252 by surrounding a space between the flexible printed circuit board 320 and the second hinge plate 253. The electronic device 101 according to an embodiment may include the first protective layer 410 surrounding the portion of the first hinge plate 252 and/or the second protective layer 420 surrounding the portion of the second hinge plate 253. When the state of the electronic device 101 changes repeatedly, a portion of the first hinge plate 252 in contact with the flexible printed circuit board 320 and/or the stiffener 310 may be protected by the protective layer 400. The protective layer 400 may be configured to reduce damage to the first hinge plate 252, the second hinge plate 253, the stiffener 310, and/or the flexible printed circuit board 320 through a reduction of the contact, and to reduce noise due to the damage.

FIG. 5A is a cross-sectional view of an exemplary electronic device in an unfolded state. FIG. 5B is a cross-sectional view of an exemplary electronic device in a folded state. FIG. 5C is an exploded view of a hinge structure of an exemplary electronic device.

Referring to FIGS. 5A and 5B, a protective layer 400 may surround a portion of a first hinge plate 252 and/or a portion of a second hinge plate 253. The protective layer 400 may include a first protective layer 410 surrounding a portion of the first hinge plate 252 and/or a second protective layer 420 surrounding a portion of the second hinge plate 253.

According to an embodiment, the first hinge plate 252 may include a first surface 252a, a second surface 252b, and a third surface 252c. The first surface 252a may face a flexible display 230 (e.g., a third display region 233). For example, the first surface 252a may be a surface of the first hinge plate 252 facing a +z direction. The second surface 252b may be opposite to the first surface 252a. For example, the second surface 252b may be a surface of the first hinge plate 252 facing a -z direction. The third surface 252c may be a surface, between the first surface 252a and the second surface 252b, facing the second hinge plate 253 in an unfolded state. For example, referring to FIG. 5A, the third surface 252c may be a surface of the first hinge plate 252 facing a +x direction.

According to an embodiment, the second hinge plate 253 may include a fourth surface 253a, a fifth surface 253b, and a sixth surface 253c. The fourth surface 253a may face the flexible display 230 (e.g., the third display region 233). For example, the fourth surface 253a may be a surface of the second hinge plate 253 facing the +z direction. The fifth surface 253b may be opposite to the fourth surface 253a. For example, the fifth surface 253b may be a surface of the second hinge plate 253 facing the -z direction. The sixth surface 253c may be a surface, between the fourth surface 253a and the fifth surface 253b, facing the first hinge plate 252 in the unfolded state. For example, referring to FIG. 5A, the sixth surface 253c may be a surface of the second hinge plate 253 facing the +x direction.

According to an embodiment, the first protective layer 410 may be parallel to a boundary between the first housing 210 and the second housing 220, and may surround a portion of the first hinge plate 252 adjacent to the second hinge plate 253, in the unfolded state. Referring to FIG. 5A, the portion of the first hinge plate 252 may include a portion of the first surface 252a, a portion of the second surface 252b, and the third surface 252c. The first protective layer 410 may at least partially surround the first surface 252a, the second surface 252b, and the third surface 252c.

According to an embodiment, the second protective layer 420 may be parallel to the boundary between the first housing 210 and the second housing 220, and may surround a portion of the second hinge plate 253 adjacent to the first hinge plate 252, in the unfolded state. Referring to FIG. 5A, the portion of the second hinge plate 253 may include a portion of the fourth surface 253a, a portion of the fifth surface 253b, and the sixth surface 253c. The second protective layer 420 may at least partially surround the fourth surface 253a, the fifth surface 253b, and the sixth surface 253c.

According to an embodiment, the stiffener 310 may be disposed at least partially overlapping with the first surface 252a and/or the second surface 252b. For example, the stiffener 310 may be disposed parallel to the first surface 252a and/or the second surface 252b in the unfolded state. Referring to FIG. 5B, when the electronic device 101 changes from the unfolded state to the folded state, the stiffener 310 may be curved while moving along the first hinge plate 252 or the second hinge plate 253. For example, a portion of the stiffener 310 may be attached to the fourth surface 253a through the adhesive tape 313. An end of the stiffener 310 may be adhered to the fourth surface 253a, and another end may be slidable. In a case that the electronic device 101 changes from the unfolded state to the folded state in a state in which a portion of the stiffener 310 is attached to the fourth surface 253a, a space between the first hinge plate 252 and the second hinge plate 253 may widen. The end of the stiffener 310 attached to the fourth surface 253a may move along the second hinge plate 253, and the other end may move along the end. Referring to FIG. 5B, in the folded state, a portion of the stiffener 310 disposed on the fourth surface 253a may be flat along the fourth surface 253a, and a remaining portion of the stiffener 310 spaced apart from the fourth surface 253a may be curved along a curved shape of the third display region 233. When the electronic device 101 changes from the folded state to the unfolded state, the stiffener 310 may move along the second hinge plate 253 and be disposed flat with respect to the first surface 252a and/or the second surface 252b.

According to an embodiment, the first protective layer 410 disposed in a portion of the first surface 252a and the second protective layer 420 disposed in a portion of the fourth surface 253a may be configured to separate the first hinge plate 252 and the second hinge plate 253 from the stiffener 310 such that the first hinge plate 252 and the second hinge plate 253 do not contact the stiffener 310. As the state of the electronic device 101 changes, when the stiffener 310 moves along the first hinge plate 252 or the second hinge plate 253, the stiffener 310 may contact the first protective layer 410 disposed in the portion of the first surface 252a and the second protective layer 420 disposed in the portion of the fourth surface 253a. For example, when the state of the electronic device 101 changes, the first protective layer 410 may surround a portion of the first surface 252a that the stiffener 310 may contact when moving, and the second protective layer 420 may surround a portion of the fourth surface 253a. Even when a rotation operation for changing the state (e.g., the unfolded state and the folded state) of the electronic device 101 is repeated, the stiffener 310 may not contact the first hinge plate 252 and the second hinge plate 253 by contacting the first protective layer 410 and the second protective layer 420. According to an embodiment, the protective layer 400 may reduce damage or wear of the first hinge plate 252, the second hinge plate 253, and the stiffener 310 by protecting the first surface 252a and/or the fourth surface 253a. The protective layer 400 may reduce noise in accordance with the damage or the wear.

According to an embodiment, the hinge structure 250 may include a hinge cover 251 disposed below the first hinge plate 252 and the second hinge plate 253. The hinge cover 251 may be disposed between the first housing 210 and the second housing 220 to at least partially surround the first hinge plate 252 and the second hinge plate 253. For example, at least a portion of the hinge cover 251 may be exposed to the outside through a space between the first housing 210 and the second housing 220 in the folded state. For example, the hinge cover 251 may be covered by the first housing 210 and the second housing 220 in the unfolded state.

Referring to FIGS. 5A and 5B, the flexible printed circuit board 320 may have a different shape according to whether the electronic device 101 is in the folded state or the unfolded state. Referring to FIG. 5A, the flexible printed circuit board 320 may include a first portion 321, a second portion 322, and a third portion 323 in the unfolded state.

According to an embodiment, the first portion 321 may extend from a first printed circuit board (e.g., the first printed circuit board 261 of FIG. 3A) to a point of the first protective layer 410 surrounding the second surface 252b, in the unfolded state. Referring to FIG. 5A, the first portion 321 may be curved from the first printed circuit board 261 in the first housing 210 toward the first hinge plate 252, may be in contact with the first protective layer 410 surrounding a surface (e.g., the second surface 252b) of the first hinge plate 252 facing the hinge cover 251, and may be extended. For example, the first portion 321 may extend from the first printed circuit board 261 in the +x direction along the first housing 210. The first portion 321 may be curved in the +z direction toward the second surface 252b of the first hinge plate 252 from a position corresponding to a first opening 218. The first portion 321 curved in the +z direction may pass through the first opening 218 and extend in the +z direction to contact the first protective layer 410 surrounding the second face 252b. The first portion 321 may be extended in the +x direction by contacting the first protective layer 410 surrounding the second face 252b and may extend to a point of the corresponding first protective layer 410 in the hinge cover 251. A portion of the first portion 321 extending in the +x direction by contacting the first protective layer 410 may be referred to as a first contact portion 321a.

According to an embodiment, the second portion 322 may extend from a second printed circuit board (e.g., the second printed circuit board 262 of FIG. 3A) to a point of the second protective layer 420 surrounding the fifth surface 253b, in the unfolded state. Referring to FIG. 5A, the second portion 322 may be curved from the second printed circuit board 262 in the second housing 220 toward the second hinge plate 253, may be in contact with the second protective layer 420 surrounding a surface (e.g., the fifth surface 253b) of the second hinge plate 253 facing the hinge cover 251, and may be extended. For example, the second portion 322 may extend from the second printed circuit board 262 in a -x direction along the second housing 220. The second portion 322 may be curved in the +z direction toward the fifth surface 253b of the second hinge plate 253 from a position corresponding to a second opening 228. The second portion 322 curved in the +z direction may pass through the second opening 228 and extend in the +z direction to contact the second protective layer 420 surrounding the fifth surface 253b. The second portion 322 may be extended in the -x direction by contacting the second protective layer 420 surrounding the fifth surface 253b and may extend to a point of the corresponding second protective layer 420 in the hinge cover 251. A portion 412a of the second portion 322 extending in the -x direction by contacting the second protective layer 420 may be referred to as a second contact portion 322a.

According to an embodiment, the third portion 323 may be disposed between the first portion 321 and the second portion 322. Referring to FIG. 5A, an end of the third portion 323 may be curved from the first portion 321 toward the hinge cover 251 in the -z direction. The third portion 323 curved in the -z direction may extend in the -z direction to be adjacent to the hinge cover 251. The third portion 323 may be curved in the +x direction by contacting a side of an inner surface of the hinge cover 251, and may extend in the +x direction along the hinge cover 251. The third portion 323 may be curved in the +z direction by contacting another side of the inner surface of the hinge cover 251. The third portion 323 curved in the +z direction may extend in the +z direction and extend to an end of the second portion 322 in contact with the protective layer 400 surrounding the fifth surface 253b.

Referring to FIG. 5B, in the folded state, the first hinge plate 252 and the second hinge plate 253 may change a shape of the flexible printed circuit board 320. When the electronic device 101 changes from the folded state to the unfolded state, the first hinge plate 252 and the second hinge plate 253 may rotate while pushing both sides of the third portion 323. As the first housing 210 and the second housing 220 rotate to be parallel to each other, the first portion 321 and the second portion 322 may be unfolded. In the folded state, a portion of the first hinge plate 252 surrounded by the first protective layer 410 and a portion of the second hinge plate 253 surrounded by the second protective layer 420 may be separated from the flexible printed circuit board 320. In the folded state, the first hinge plate 252 and the second hinge plate 253 may not directly contact the flexible printed circuit board 320 by the first protective layer 410 and the second protective layer 420.

According to an embodiment, the first protective layer 410 disposed in a portion of the second surface 252b and the second protective layer 420 disposed in a portion of the fifth surface 253b may be configured to separate the first hinge plate 252 and the second hinge plate 253 from the flexible printed circuit board 320 such that the first hinge plate 252 and the second hinge plate 253 do not contact the flexible printed circuit board 320. As illustrated in FIGS. 5A and 5B, in the unfolded state and the folded state of the electronic device 101, the protective layer 400 may separate the first hinge plate 252 and the second hinge plate 253 from the flexible printed circuit board 320. In the unfolded state, the protective layer 400 may surround the first hinge plate 252 and/or the second hinge plate 253 to cover the first contact portion 321a and/or the second contact portion 322a. For example, in the unfolded state, the first protective layer 410 may have a size that may cover the first contact portion 321a of the first portion 321 extending by contacting the first protective layer 410. In the unfolded state, the second protective layer 420 may have a size that may cover the second contact portion 322a of the second portion 322 by contacting the second protective layer 420. According to an embodiment, the protective layer 400 may reduce damage or wear of the first hinge plate 252, the second hinge plate 253, and the flexible printed circuit board 320 by protecting the second surface 252b and/or the fifth surface 253b. The protective layer 400 may reduce noise that may occur due to the damage or the wear.

Referring to FIG. 5A, when the electronic device 101 is in the unfolded state, the first hinge plate 252 and the second hinge plate 253 may be disposed on substantially the same plane. When the electronic device 101 is in the unfolded state, the first housing 210 and the second housing 220 may be disposed on substantially the same plane. For example, in the unfolded state, since the first surface 252a of the first hinge plate 252 and the fourth surface 253a of the second hinge plate 253 face substantially the same direction, an angle between the first face 252a and the fourth face 253a may be substantially approximately 180 degrees. For example, in the unfolded state, since a first surface 211 of the first housing 210 and a third surface 221 of the second housing 220 face substantially the same direction, an angle between the first surface 211 and the third surface 221 may be substantially approximately 180 degrees.

Referring to FIG. 5B, when the electronic device 101 changes from the unfolded state to the folded state, a rotation angle range of the first housing 210 and/or the second housing 220 and a rotation angle range of the first hinge plate 252 and/or the second hinge plate 253 may be different from each other. According to the difference in the rotation angle range, the third display region 233 of the flexible display 230 may be curved in a water drop shape in the folded state. In the folded state, the second hinge plate 253 may not be parallel with respect to the first hinge plate 252 and may have an inclination. For example, in the folded state, a direction in which the first surface 252a of the first hinge plate 252 faces and a direction in which the fourth surface 253a of the second hinge plate 253 faces may not face opposite directions to each other, and may have an inclination with respect to each other. For example, the angle (e.g., an angle A of FIG. 5B) between the first surface 252a and the fourth surface 253a may be an acute angle less than 90 degrees.

According to an embodiment, when the electronic device 101 changes from the unfolded state to the folded state, the rotation angle range of the first housing 210 and the second housing 220 may be in a first angle range. For example, the first housing 210 and/or the second housing 220 may rotate from the unfolded state in which the first housing 210 and the second housing 220 are disposed parallel to each other on substantially the same plane, to the folded state in which the first housing 210 and the second housing 220 are opposite to each other. In the unfolded state, the angle between the first surface 211 of the first housing 210 and the third surface 221 of the second housing 220 may be approximately 180 degrees. In the folded state, since the first surface 211 of the first housing 210 and the third surface 221 of the second housing 220 are parallel to each other, the angle between the first surface 211 and the third surface 221 may be substantially approximately 0°.

For example, when the electronic device 101 changes from the unfolded state to the folded state, due to an external force (e.g., a force applied by a user), the first housing 210 and the second housing 220 may be disposed parallel to each other by each rotating approximately 90 degrees (e.g., an angle B of FIG. 5B). For example, when the electronic device 101 changes from the unfolded state to the folded state, the second housing 220 may be opposite to the first housing 210 by rotating approximately 180 degrees with respect to the first housing 210. According to an embodiment, when the electronic device 101 changes from the unfolded state to the folded state, a sum of a rotation angle of the first housing 210 and a rotation angle of the second housing 220 may be approximately 180 degrees. For example, the first angle range may be approximately 0° to approximately 180°.

According to an embodiment, when the electronic device 101 changes from the unfolded state to the folded state, the rotation angle range of the first hinge plate 252 and the second hinge plate 253 may be in a second angle range, which is larger than the first angle range. For example, the first hinge plate 252 and the second hinge plate 253 may rotate from the unfolded state in which the first hinge plate 252 and the second hinge plate 253 are disposed parallel to each other on substantially the same plane, to the folded state in which the first hinge plate 252 and the second hinge plate 253 have an inclination with respect to each other. In the unfolded state, the angle between the first surface 252a of the first hinge plate 252 and the fourth surface 253a of the second hinge plate 253 may be approximately 180 degrees. In the folded state, the first surface 252a of the first hinge plate 252 and the fourth surface 253a of the second hinge plate 253 may form an acute angle (e.g., the angle A of FIG. 5B) with respect to each other.

For example, when the electronic device 101 changes from the unfolded state to the folded state, each of the first hinge plate 252 and the second hinge plate 253 may have the inclination with respect to each other by rotating by an angle (e.g., an angle C of FIG. 5B) greater than 90 degrees. For example, as illustrated in FIG. 5B, when the electronic device 101 changes from the unfolded state to the folded state, the first hinge plate 252 and the second hinge plate 253 may each rotate by a degree a (e.g., 100 degrees) greater than 90 degrees. The angle between the first surface 252a and the fourth surface 253a may be 2a-180 degrees (e.g., 20 degrees). According to an embodiment, when the electronic device 101 changes from the unfolded state to the folded state, a sum of a rotation angle of the second hinge plate 253 and a rotation angle of the second hinge plate 253 may be greater than 180 degrees. For example, the second angle range may be approximately 0° to approximately 200°. However, it is not limited thereto.

The above-described rotation operation of the first hinge plate 252 and the second hinge plate 253 may be implemented through the hinge structure 250 illustrated in FIG. 5C. Referring to FIG. 5C, the hinge structure 250 may include the first hinge plate 252, the second hinge plate 253, and a hinge bracket 255. The first hinge plate 252 and the second hinge plate 253 may be coupled to the hinge bracket 255.

According to an embodiment, the hinge bracket 255 may provide a rotation axis of the first hinge plate 252 and the second hinge plate 253. For example, the hinge bracket 255 may include a first guide groove 255a to which the first hinge plate 252 is slidably connected and a second guide groove 255b to which the second hinge plate 253 is slidably connected. For example, the first hinge plate 252 may include a first coupling portion 252d inserted into the first guide groove 255a and slidable in the first guide groove 255a. For example, the second hinge plate 253 may include a second coupling portion 253d inserted into the second guide groove 255b and slidable in the second guide groove 255b. The first hinge plate 252 may slide along the first guide groove 255a through the first coupling portion 252d, and the second hinge plate 253 may slide along the second guide groove 255b through the second coupling portion 253d. Since the first guide groove 255a and the second guide groove 255b have a curvature, the first coupling portion 252d and the second coupling portion 253d may form a rotation angle while sliding. A general hinge may rotate with respect to a constant rotation axis with a rotation axis not changing when rotating. In contrast, since the first hinge plate 252 and the second hinge plate 253 rotate while sliding along the first guide groove 255a and the second guide groove 255b, the rotation axis may be changed. For example, as the first hinge plate 252 slides along the first guide groove 255a and the second hinge plate 253 slides along the second guide groove 255b, a space between the first hinge plate 252 and the second hinge plate 253 may widen. As the space between the first hinge plate 252 and the second hinge plate 253 widens, the first hinge plate 252 and the second hinge plate 253 may have the inclination with respect to each other in a state of fully moving along the first guide groove 255a and the second guide groove 255b.

According to an embodiment, the electronic device 101 may change from the unfolded state to the folded state by movement of the first hinge plate 252 and/or the second hinge plate 253. Since the rotation angle range of the first hinge plate 252 and the second hinge plate 253 and the rotation angle range of the first housing 210 and the second housing 220 are different, the electronic device 101 according to an embodiment may provide a structure in which a curvature change of the flexible display 230 is gentle in the folded state. For example, in the folded state, in a case that the first hinge plate 252 and the second hinge plate 253 are disposed parallel to each other, a curvature of the flexible display 230 supported by the first hinge plate 252 and the second hinge plate 253 may change rapidly between the first hinge plate 252 and the second hinge plate 253. According to an embodiment, in the folded state, since the first hinge plate 252 and the second hinge plate 253 are inclined with respect to each other, the curvature change of the flexible display 230 may be gentle. Since the curvature of the flexible display 230 changes gently, damage to the flexible display 230 may be reduced. For example, in the folded state, a formation of a wrinkle in a region (e.g., the third display region 233) where the flexible display 230 is folded may be reduced.

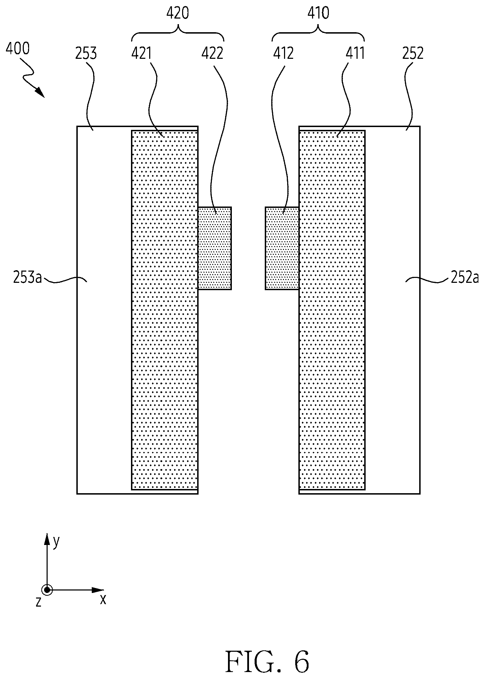

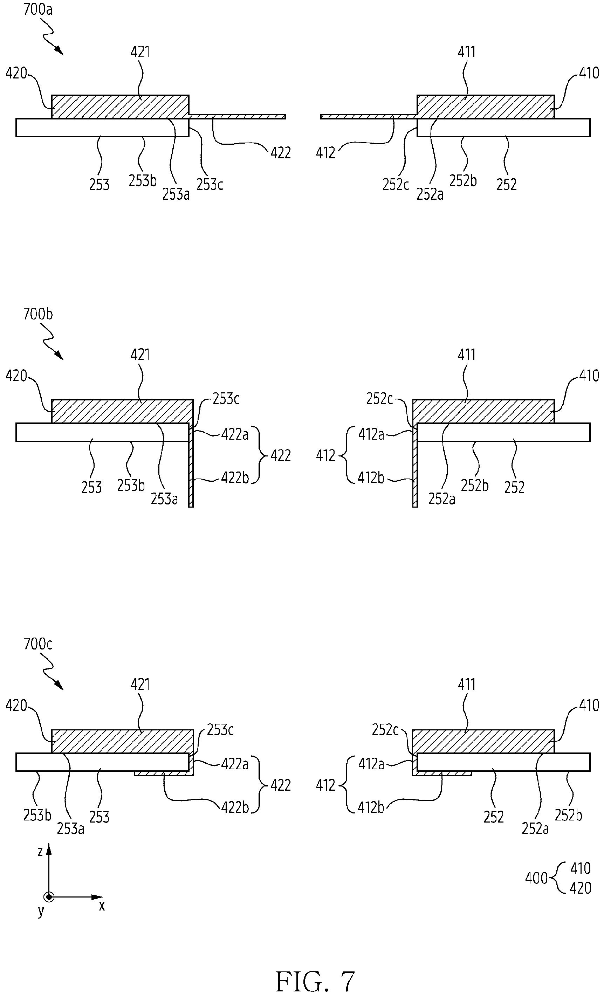

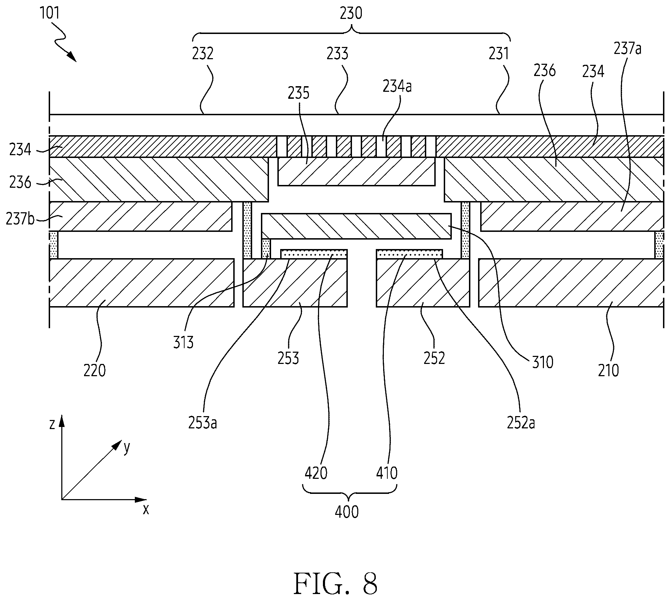

FIG. 6 illustrates an exemplary protective layer in a state before being attached to a hinge plate. FIG. 7 illustrates a process of attaching a protective layer of an exemplary electronic device 101 to a hinge plate. FIG. 8 schematically illustrates a cross-sectional view of an exemplary electronic device cut along line B-B' of FIG. 3A.

Referring to FIGS. 6 and 7, a protective layer 400 may be configured with portions having a different structure according to a position attached to hinge plates 252 and 253. According to an embodiment, since a stiffener 310 may extend along a third display region 233, the protective layer 400 may cover an entire region of surfaces (e.g., a first surface 252a and a fourth surface 253a) of the hinge plates 252 and 253 facing a flexible display 230 to separate a contact between the stiffener 310 disposed above the hinge plates 252 and 253 and the hinge plates 252 and 253. According to an embodiment, since a flexible printed circuit board 320 passes through only a partial region of a hinge structure 250, the protective layer 400 may cover only a partial region of surfaces (e.g., the second surface 252b and the fifth surface 253b of FIG. 5A) opposite to a surface of the hinge plates 252 and 253 facing the flexible display 230 to separate a contact between the flexible printed circuit board 320 disposed below the hinge plates 252 and 253 and the hinge plates 252 and 253.

Referring to FIGS. 6 and 7, a first protective layer 410 may include a first portion 411 and a second portion 412. For example, the first portion 411 of the first protective layer 410 may be attached to the first surface 252a of the first hinge plate 252. The first portion 411 may extend along the first surface 252a. For example, a length of the first portion 411 may be substantially the same as a length of a first plate. According to an embodiment, the second portion 412 may protrude from a portion of the first portion 411. For example, the second portion 412 may protrude from a portion of a periphery of the first portion 411 facing the second hinge plate 253 among peripheries of the first portion 411. For example, the second portion 412 may protrude from the portion of the first portion 411 in a -x direction.

A second protective layer 420 may be symmetrical to the first protective layer 410. For example, the second protective layer 420 may include a third portion 421 corresponding to the first portion 411 and a fourth portion 422 corresponding to the second portion 412. The third portion 421 may be attached to the fourth surface 253a of the second hinge plate 253. The third portion 421 may extend along the fourth surface 253a. For example, a length of the third portion 421 may be substantially the same as a length of a second plate. According to an embodiment, the fourth portion 422 may protrude from a portion of the third portion 421. For example, the fourth portion 422 may protrude from a portion of a periphery of the third portion 421 facing the first hinge plate 252 among peripheries of the third portion 421. For example, the fourth portion 422 may protrude from the portion of the third portion 421 in the -x direction.

Referring to FIG. 7, the first protective layer 410 may surround a portion of the first hinge plate 252 adjacent to the second hinge plate 253, and the second protective layer 420 may surround a portion of the second hinge plate 253 adjacent to the first hinge plate 252.

700a of FIG. 7 indicates a state in which the first portion 411 of the first protective layer 410 is attached to the first surface 252a and the third portion 421 of the second protective layer 420 is attached to the fourth surface 253a. When the first protective layer 410 is attached to the first hinge plate 252, the first portion 411 may be attached to the first surface 252a first. When the first protective layer 410 is attached to the first surface 252a, a periphery of the first portion 411 in which the second portion 412 is formed may be attached to correspond to a periphery of the first hinge plate 252. In a state in which the first portion 411 is attached to the first surface 252a, the second portion 412 protruding from the first portion 411 may protrude in a direction from the first surface 252a toward the second hinge plate 253. When the second protective layer 420 is attached to the second hinge plate 253, the third portion 421 may be attached to the fourth surface 253a first. When the second protective layer 420 is attached to the fourth surface 253a, a periphery of the third portion 421 in which the fourth portion 422 is formed may be attached to correspond to a periphery of the second hinge plate 253. In a state in which the third portion 421 is attached to the fourth surface 253a, the fourth portion 422 protruding from the third portion 421 may protrude in a direction from the fourth surface 253a toward the first hinge plate 252.

700b of FIG. 7 indicates a state in which a portion 412a of the second portion 412 of the first protective layer 410 is attached to a third surface 252c, and a portion 422a of the fourth portion 422 of the second protective layer 420 is attached to a sixth surface 253c. The portion 412a of the second portion 412 may be attached to the third surface 252c. In a state in which the second portion 412 protrudes from the first hinge plate 252, the portion 412a of the second portion 412 may be attached to the third surface 252c between the first surface 252a and the second surface 252b while being curved at 90 degrees with respect to the first portion 411. A remaining portion 412b of the second portion 412 not attached to the third surface 252c may protrude from a periphery of the third surface 252c. The portion 422a of the fourth portion 422 may be attached to the sixth surface 253c. In a state in which the second portion 412 protrudes from the second hinge plate 253, the portion 422a of the fourth portion 422 may be attached to the sixth surface 253c between the fourth surface 253a and the fifth surface 253b in a state of being curved at 90 degrees with respect to the third portion 421. A remaining portion 422b of the fourth portion 422 not attached to the sixth surface 253c may protrude from a periphery of the sixth surface 253c.

700c of FIG. 7 indicates a state in which the first protective layer 410 is fully attached to the first hinge plate 252 and the second protective layer 420 is fully attached to the second hinge plate 253. In order for the first protective layer 410 to surround a portion of the first hinge plate 252 adjacent to the second hinge plate 253, the remaining portion 412b of the second portion 412 may be attached to the second surface 252b. The remaining portion 412b of the second portion 412 protruding from the periphery of the third surface 252c may be attached to the second surface 252b while being curved at 90 degrees with respect to the portion 412a of the second portion 412. In order for the second protective layer 420 to surround a portion of the second hinge plate 253 adjacent to the first hinge plate 252, the remaining portion 422b of the fourth portion 422 may be attached to the fifth surface 253b. The remaining portion 422b of the fourth portion 422 protruding from the periphery of the sixth surface 253c may be attached to the sixth surface 253c while being curved at 90 degrees with respect to the portion 422a of the fourth portion 422.

According to an embodiment, the protective layer 400 surrounding a portion of the hinge plates 252 and 253 may be integrally formed. In order for the integrally formed protective layer 400 to surround a portion of the hinge plates 252 and 253, a length of the second portion 412 and a length of the fourth portion 422 may be longer than a length of the third surface 252c and a length of the sixth surface 253c, respectively. In order to surround a portion of the hinge plates 252 and 253, the integrally formed protective layer 400 may be firmly attached without being detached from the hinge plates 252 and 253. As a state (e.g., a folded state or an unfolded state) of an electronic device 101 changes repeatedly, the stiffener 310 supporting a third display region 233 may repeatedly contact the protective layer 400. Since the stiffener 310 is slidable along the first hinge plate 252 or the second hinge plate 253, the protective layer 400 may be damaged by contact between the stiffener 310 and the protective layer 400. According to an embodiment, a thickness of the first portion 411 facing the stiffener 310 may be thicker than a thickness of the second portion 412. Similarly, a thickness of the third portion 421 may be thicker than a thickness of the fourth portion 422.

According to an embodiment, the second portion 412 may protrude from a portion of a periphery of the first portion 411, and the fourth portion 422 may protrude from a portion of a periphery of the third portion 421. The second portion 412 and the fourth portion 422 may be formed at a position corresponding to a region in which the flexible printed circuit board 320 passes through the hinge structure 250. A position of the second portion 412 may correspond to a region in which the flexible printed circuit board 320 passes through the hinge structure 250 when the first portion 411 is attached to the first surface 252a. A position of the fourth portion 422 may correspond to a region in which the flexible printed circuit board 320 passes through the hinge structure 250 when the third portion 421 is attached to the fourth surface 253a. For example, referring again to FIG. 4, in the region in which the flexible printed circuit board 320 passes through the hinge structure 250, the protective layer 400 may surround surfaces of the hinge plates 252 and 253 facing the flexible printed circuit board 320. According to an embodiment, the protective layer 400 may cover only a region of the hinge plates 252 and 253 corresponding to the region in which the flexible printed circuit board 320 passes through the hinge structure 250 without needing to cover an entire region of the second surface 252b and the fifth surface 253b.

Referring to FIG. 8, in a region in which the flexible printed circuit board 320 does not pass through the hinge structure 250, the protective layer 400 may not surround the surfaces of the hinge plates 252 and 253 facing the flexible printed circuit board 320, and may only surround surfaces facing the flexible display 230. Since the protective layer 400 having the structure does not include an unnecessary portion, manufacture may be easy and inexpensive. In order for the protective layer 400 to separate contact between the flexible printed circuit board 320 and the hinge plates 252 and 253, a width of the second portion 412 and the fourth portion 422 may be greater than a width of the flexible printed circuit board 320.

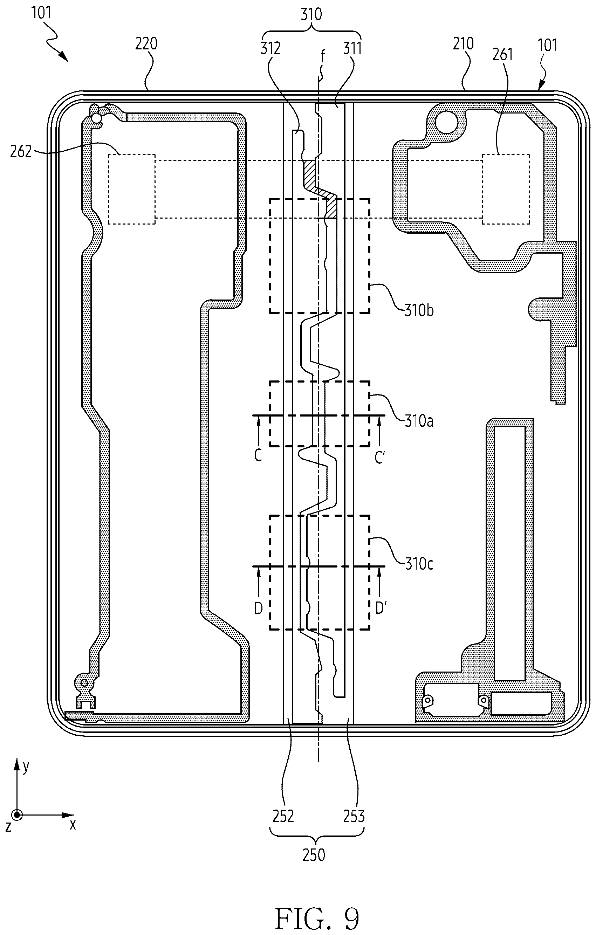

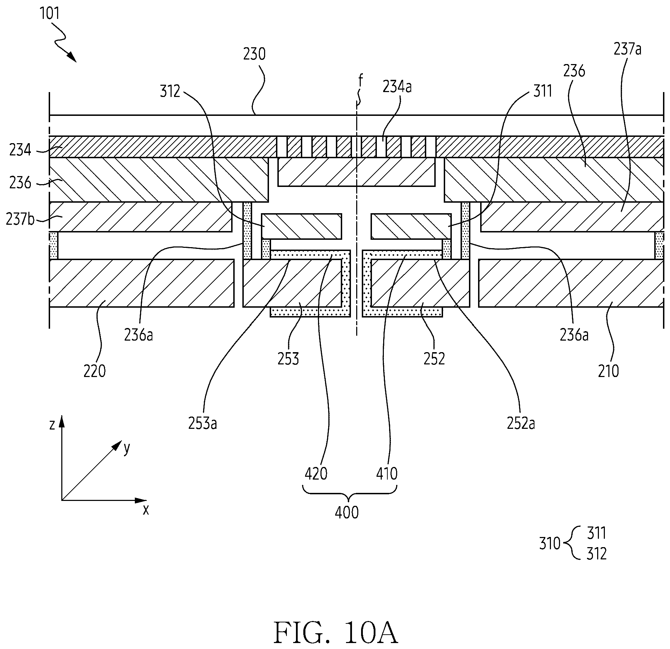

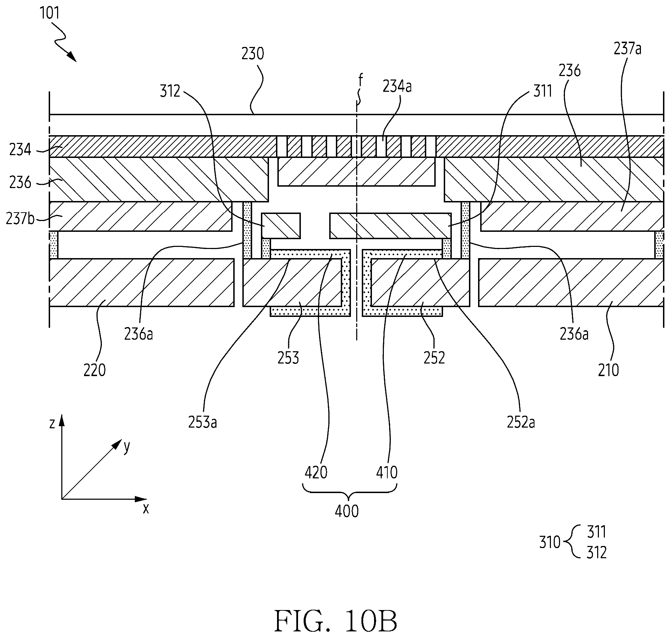

FIG. 9 illustrates a stiffener disposed in an exemplary electronic device from which a flexible display is omitted in an unfolded state. FIG. 10A schematically illustrates a cross-sectional view of an exemplary electronic device cut along line C-C' of FIG. 9. FIG. 10B schematically illustrates a cross-sectional view of an exemplary electronic device cut along line D-D' of FIG. 9.

Referring to FIG. 9, a stiffener 310 may include a first stiffener 311 and a second stiffener 312 separated from each other. The first stiffener 311 may be adjacent to a first housing 210 of the first housing 210 and a second housing 220. The second stiffener 312 may be spaced apart from the first stiffener 311 and may be adjacent to the second housing 220 of the first housing 210 and the second housing 220.

According to an embodiment, a boundary between the first stiffener 311 and the second stiffener 312 may not be parallel. For example, the stiffener 310 may have a first region 310a in which a gap between the first stiffener 311 and the second stiffener 312 corresponds to a folding axis f, a second region 310b in which the gap is spaced from the folding axis f in a direction where the first housing 210 is disposed, and a third region 310c in which the gap is spaced from the folding axis f in a direction where the second housing 220 is disposed. For example, the first region 310a may include the folding axis f. For example, the second region 310b may be spaced apart from the folding axis f toward the first housing 210. For example, the third region 310c may be spaced apart from the folding axis f toward the second housing 220.

Referring to FIG. 10A, a width of the first stiffener 311 and the second stiffener 312 in the first region 310a may be substantially the same. The first stiffener 311 may be disposed between a flexible display 230 and a first hinge plate 252, and the second stiffener 312 may be disposed between the flexible display 230 and a second hinge plate 253. The gap between the first stiffener 311 and the second stiffener 312 may correspond to the folding axis f. The first stiffener 311 may be attached to the first hinge plate 252, and the second stiffener 312 may be attached to the second hinge plate 253. A first protective layer 410 may be disposed between the first stiffener 311 and the first hinge plate 252, and may separate contact between the first stiffener 311 and the first hinge plate 252. A second protective layer 420 may be disposed between the second stiffener 312 and the second hinge plate 253, and may separate contact between the second stiffener 312 and the second hinge plate 253.

Referring to FIG. 10B, in the second region 310b and the third region 310c, widths of the first stiffener 311 and the second stiffener 312 may be different. For example, a width of the first stiffener 311 may be wider than a width of the second stiffener 312 in the third region 310c illustrated in FIG. 10B. The first stiffener 311 may be disposed on the first hinge plate 252 and the second hinge plate 253, and the second stiffener 312 may be disposed on the second hinge plate 253. The gap between the first stiffener 311 and the second stiffener 312 may be spaced apart from the folding axis f in a direction (e.g., a -x direction) toward the second housing 220. Although not illustrated, the width of the second stiffener 312 may be wider than the width of the first stiffener 311 in the second region 310b. Even in a case that the stiffener 310 includes the first stiffener 311 and the second stiffener 312 that are separated, a protective layer 400 may separate contact between the stiffener 310 and the hinge plates 252 and 253. Even when a boundary of the stiffener 310 is spaced apart from the folding axis f in the second region 310b and the third region 310c, the protective layer 400 may separate the contact between the stiffener 310 and the hinge plates 252 and 253 by surrounding a portion of the hinge plates 252 and 253. The hinge plates 252 and 253 may be protected by the protective layer 400.

According to an embodiment, an electronic device (e.g., the electronic device 101 of FIG. 3A) may comprise a flexible display (e.g., the flexible display 230 of FIG. 2A), a first housing (e.g., the first housing 210 of FIG. 3A), a second housing (e.g., the second housing 220 of FIG. 3A), a hinge structure (e.g., the hinge structure 250 of FIG. 5C), a stiffener (e.g., the stiffener 310 of FIG. 4), a flexible printed circuit board (e.g., the flexible printed circuit board 320 of FIG. 5A), and a protective layer (e.g., the protective layer 400 of FIG. 5A). The flexible display may include a first display region (e.g., the first display region 231 of FIG. 2A), a second display region (e.g., the second display region 232 of FIG. 2A), and a third display region (e.g., the third display region 233 of FIG. 2A). The third display region may be positioned between the first display region and the second display region. The first housing may support the first display region. The first housing may be disposed below the first display region. The second housing may be configured to be rotatable with respect to the first housing based on a folding axis. The second housing may support the second display region. The second housing may be disposed below the second display region. The hinge structure may include a first hinge plate (e.g., the first hinge plate 252 of FIG. 5C) and a second hinge plate (e.g., the second hinge plate 253 of FIG. 5C). The first hinge plate and the second hinge plate may be disposed along a boundary between the first housing and the second housing. The hinge structure may be disposed below the third display region. The stiffener may support the third display region. The stiffener may be disposed between the hinge structure and the third display region. The flexible printed circuit board, FPCB, may extend from a first printed circuit board (e.g., the first printed circuit board 261 of FIG. 3A), PCB, in the first housing, passing through the hinge structure, to a second PCB (e.g., the second printed circuit board 262 of FIG. 3A) in the second housing. The protective layer, parallel to the boundary, may cover a portion of the first hinge plate adjacent to the second hinge plate, in an unfolded state in which a first direction the first display region faces and a second direction the second display region faces correspond to each other. A rotation angle range of the first hinge plate and the second hinge plate may be greater than a rotation angle range of the first housing and the second housing. According to an embodiment of the present disclosure, the protective layer may protect the hinge plates by surrounding a portion of the hinge plates. The protective layer may be configured to separate contact between the hinge plates and the stiffener and contact between the hinge plates and the flexible printed circuit board when the electronic device changes to a folded state/unfolded state. According to an embodiment, damage or wear of the stiffener, the flexible printed circuit board, and the hinge plates may be reduced, and noise caused by the damage or the wear may be reduced. According to an embodiment, the hinge structure may rotate the third display region of the flexible display to be curved in a water drop shape in the folded state. For example, while a state of the electronic device changes from the unfolded state to the folded state, the first housing and the second housing may rotate approximately 90 degrees, respectively, and the first hinge plate and the second hinge plate may rotate approximately 100 degrees, respectively. According to the embodiment, in the folded state, since the first hinge plate and the second hinge plate are inclined with respect to each other, a curvature change of the flexible display may be gentle. Since a curvature of the flexible display is gently changed, damage to the flexible display may be reduced. For example, in the folded state, a formation of a wrinkle in a region (e.g., the third display region) in which the flexible display is folded may be reduced.

According to an embodiment, the protective layer may be configured to separate the first hinge plate from the stiffener, in a plurality of states comprising the unfolded state and a folded state in which the first direction and the second direction are opposite to each other. The protective layer may be configured to separate the first hinge plate from the FPCB, in the plurality of states. According to an embodiment of the present disclosure, the protective layer may separate the contact between the hinge plates and the stiffener and the contact between the hinge plates and the flexible printed circuit board by surrounding the hinge plates. According to an embodiment, as the protective layer protects the hinge plates, while the state of the electronic device changes, the damage or the wear of the stiffener, the flexible printed circuit board, and the hinge plates may be reduced, and the noise caused by the damage or the wear may be reduced.

According to an embodiment, the first hinge plate may include a first surface (e.g., the first surface 252a of FIG. 5A), a second surface (e.g., the second surface 252b of FIG. 5A), and a third surface (e.g., the third surface 252c of FIG. 5A). The first surface may face the flexible display. The second surface may be opposite to the first surface. The third surface may face the second hinge plate in the unfolded state. The third surface may be disposed between the first surface and the second surface. The protective layer may at least partially surround the first surface, the second surface, and the third surface. According to an embodiment of the present disclosure, the protective layer may at least partially surround a portion in which the hinge plates are adjacent to each other, in the unfolded state. The portion in which the hinge plates are adjacent to each other may be a portion that may contact another component (e.g., the stiffener and/or the flexible printed circuit board) when the electronic device performs a rotation operation. The protective layer may be disposed to surround the portion.

According to an embodiment, the protective layer may include a first portion (e.g., the first portion 411 of FIG. 6) and a second portion (e.g., the second portion 412 of FIG. 6). The first portion may be attached to a first surface of the first hinge plate facing the flexible display. The second portion may protrude from a periphery facing the second hinge plate from among peripheries of the first portion. The second portion may be attached to a second surface of the first hinge plate opposite to the first surface and a third surface of the first hinge plate between the first surface and the second surface, facing the second hinge plate in the unfolded state.

According to an embodiment, the first portion may be attached to the first surface. A portion of the second portion may be attached to the third surface in a curved state with respect to the first portion. A remaining portion of the second portion may be attached to the second surface in a curved state with respect to the portion of the second portion.

According to an embodiment, a thickness of the first portion may be thicker than a thickness of the second portion. According to an embodiment of the present disclosure, since the stiffener is slidable by an operation of the hinge plate, the thickness of the first portion contacting the stiffener may be thicker than the thickness of the second portion.

According to an embodiment, the second portion may protrude from a portion of the periphery of the first portion at a position corresponding to a region where the FPCB passes through the hinge structure. According to an embodiment of the present disclosure, the protective layer may be attached to surround a portion of the hinge plates. Since the stiffener extends along an entire region of the hinge plates, the first portion may correspond to a surface of the hinge plate. Since the flexible printed circuit board contacts only a partial region of the hinge plates, the second portion may correspond to a portion of another surface of the hinge plate. The second portion may cover the other surface by protruding and being curved from a portion of a periphery of the first portion.

According to an embodiment, the hinge structure may further include a hinge cover (e.g., the hinge cover 251 of FIG. 5A). The hinge cover may be disposed below the first hinge plate and the second hinge plate. The hinge cover may be disposed between the first housing and the second housing. The flexible printed circuit board may include a first portion (e.g., the first portion 321 of FIG. 5A), a second portion (e.g., the second portion 322 of FIG. 5A), and a third portion (e.g., the third portion 323 of FIG. 5A) in the unfolded state. The first portion, in the unfolded state, may be curved from the first PCB toward the first hinge plate. The first portion may extend in contact with the protective layer covering a surface (e.g., the second surface 253b of FIG. 5A) of the first hinge plate facing the hinge cover. The second portion, in the unfolded state, may be curved from the second PCB toward the second hinge plate. The second portion may extend in contact with the protective layer covering a surface of the second hinge plate facing the hinge cover. The third portion may be disposed between the first portion and the second portion. The third portion may be disposed in the hinge cover.

According to an embodiment, the protective layer may surround a surface of the hinge plate facing the hinge structure in the unfolded state, such that the protective layer is contacted with a portion of the first portion of the FPCB extending in contact with the protective layer surrounding the surface of the first hinge plate facing the hinge cover. According to an embodiment of the present disclosure, the flexible printed circuit board may include a plurality of curved regions, in the unfolded state. The plurality of regions of the flexible printed circuit board may contact the first hinge plate and the second hinge plate, in the unfolded state. The protective layer may separate the contact between the flexible printed circuit board and the hinge plates by surrounding the hinge plates.

According to an embodiment, the stiffener may be flat in the unfolded state. The stiffener may be curved in a folded state in which the first direction and the second direction are opposite each other.

According to an embodiment, the stiffener may be attached to one of the first hinge plate and the second hinge plate. According to an embodiment of the present disclosure, the stiffener may provide rigidity to the third display region, which is a flexible region of the flexible display. The stiffener may be flat to correspond to the third display region in the unfolded state. The stiffener may be curved to correspond to the third display region in the folded state.

According to an embodiment, the stiffener may include a first stiffener (e.g., the first stiffener 411 of FIG. 9) and a second stiffener (e.g., the second stiffener 412 of FIG. 9). The first stiffener may be adjacent to the first housing of the first housing and the second housing. The second stiffener may be spaced apart from the first stiffener. The second stiffener may be adjacent to the second housing of the first housing and the second housing.

According to an embodiment, the stiffener may have a first region (e.g., the first region 310a of FIG. 9), a second region (e.g., the second region 310b of FIG. 9), and a third region (e.g., the third region 310c of FIG. 9). In the first region, a gap between the first stiffener and the second stiffener may correspond to the folding axis. In the second region, the gap may be spaced apart from the folding axis in a direction where the first housing is disposed. In the third region, the gap may be spaced apart from the folding axis in a direction where the second housing is disposed. According to an embodiment of the present disclosure, the stiffener may be integrally formed or may include separate parts. For example, the stiffener may include the first stiffener adjacent to the first housing and the second stiffener adjacent to the second housing. Stiffeners separated from each other may support the third display region. The stiffeners separated from each other may correspond to the boundary between the first housing and the second housing, or may be more adjacent to any one of the first housing and the second housing.

According to an embodiment, the hinge structure may further include a hinge bracket (e.g., the hinge bracket 255 of FIG. 5C). The hinge bracket may include a first guide groove (e.g., the first guide groove 255a of FIG. 5C) and a second guide groove (e.g., the second guide groove 255b of FIG. 5C). The first hinge plat may be slidably connected to the first guide groove. The second hinge plate may be slidably connected to the second guide groove. According to an embodiment of the present disclosure, the first hinge plate and the second hinge plate may be configured to be rotatable in a rotation angle range different from the rotation angle range of the first housing and the second housing. The first hinge plate and the second hinge plate connected to the hinge bracket may be disposed to have an inclination with respect to each other in the folded state. Through the disposition structure, the third display region may be curved in a water drop shape.

According to an embodiment, the electronic device may further comprise a second protective layer (e.g., the second protective layer 420 of FIG. 5A) different from a first protective layer (e.g., the first protective layer 410 of FIG. 5A) corresponding to the protective layer. The second protective layer may surround a portion of the second hinge plate, parallel to the boundary, adjacent to the first hinge plate, in the unfolded state. According to an embodiment of the present disclosure, each of the first hinge plate and the second hinge plate may be surrounded by the protective layer. The protective layer may include the first protective layer surrounding the first hinge plate and the second hinge plate surrounding the second hinge plate.

According to an embodiment, an electronic device (e.g., the electronic device 101 of FIG. 3A) may comprise a flexible display (e.g., the flexible display 230 of FIG. 2A), a first housing (e.g., the first housing 210 of FIG. 3A), a second housing (e.g., the second housing 220 of FIG. 3A), a hinge structure (e.g., the hinge structure 250 of FIG. 5C), a flexible printed circuit board (e.g., the flexible printed circuit board 320 of FIG. 5A), a first protective layer (e.g., the first protective layer 410 of FIG. 5A), and a second protective layer (e.g., the second protective layer 420 of FIG. 5A). The flexible display may include a first display region (e.g., the first display region 231 of FIG. 2A), a second display region (e.g., the second display region 232 of FIG. 2A), and a third display region (e.g., the third display region 233 of FIG. 2A). The third display region may be positioned between the first display region and the second display region. The first housing may be disposed below the first display region. The second housing may be configured to be rotatable with respect to the first housing based on a folding axis. The second housing may be disposed below the second display region. The hinge structure may include a first hinge plate (e.g., the first hinge plate 252 of FIG. 5C) and a second hinge plate (e.g., the second hinge plate 253 of FIG. 5C). The first hinge plate and the second hinge plate may be disposed along a boundary between the first housing and the second housing. The hinge structure may be disposed below the third display region. The flexible printed circuit board, FPCB, may extend from a first printed circuit board (e.g., the first printed circuit board 261 of FIG. 3A), PCB, in the first housing, passing through the hinge structure, to a second PCB (e.g., the second printed circuit board 262 of FIG. 3A) in the second housing. The first protective layer, parallel to the boundary, may surround a portion of the first hinge plate adjacent to the second hinge plate, in an unfolded state in which a first direction where the first display region faces and a second direction where the second display region faces correspond to each other. The second protective layer may surround a portion of the second hinge plate, parallel to the boundary, adjacent to the first hinge plate, in the unfolded state. The second hinge plate may be inclined with respect to the first hinge plate in a folded state in which the first direction and the second direction are opposite to each other.

According to an embodiment, the electronic device may further comprise a stiffener (e.g., the stiffener 310 of FIG. 4). The stiffener may support the third display region. The stiffener may be disposed between the hinge structure and the third display region. The first protective layer and the second protective layer may be configured to separate the first hinge plate and the second hinge plate from the stiffener and separate the first hinge plate and the second hinge plate from the flexible printed circuit board in a plurality of states including the unfolded state and the folded state.

According to an embodiment, the first hinge plate may include a first surface (e.g., the first surface 252a of FIG. 5A), a second surface (e.g., the second surface 252b of FIG. 5A), and a third surface (e.g., the third surface 252c of FIG. 5A). The first surface may face the flexible display. The second surface may be opposite to the first surface. The third surface may face the second hinge plate in the unfolded state. The third surface may be disposed between the first surface and the second surface. The protective layer may at least partially surround the first surface, the second surface, and the third surface. The second hinge plate may include a fourth surface (e.g., the fourth surface 253a of FIG. 5A), a fifth surface (e.g., the fifth surface 253b of FIG. 5A), and a sixth surface (e.g., the sixth surface 253c of FIG. 5A). The first protective layer may at least partially surround the first surface, the second surface, and the third surface. The second protective layer may at least partially surround the fourth surface, the fifth surface, and the sixth surface.

According to an embodiment, the hinge structure may further include a hinge cover (e.g., the hinge cover 251 of FIG. 5A). The hinge cover may be disposed below the first hinge plate and the second hinge plate. The hinge cover may be disposed between the first housing and the second housing. The flexible printed circuit board may include a first portion (e.g., the first portion 321 of FIG. 5A), a second portion (e.g., the second portion 322 of FIG. 5A), and a third portion (e.g., the third portion 323 of FIG. 5A) in the unfolded state. The first portion, in the unfolded state, may be curved from the first PCB toward the first hinge plate. The first portion may extend in contact with the protective layer covering a surface (e.g., the second surface 253b of FIG. 5A) of the first hinge plate facing the hinge cover. The second portion, in the unfolded state, may be curved from the second PCB toward the second hinge plate. The second portion may extend in contact with the protective layer covering a surface of the second hinge plate facing the hinge cover. The third portion may be disposed between the first portion and the second portion. The third portion may be disposed in the hinge cover.

According to an embodiment, the first protective layer may contact the first portion to separate the first hinge plate from the flexible printed circuit board in the unfolded state. The second protective layer may contact the second portion to separate the second hinge plate from the flexible printed circuit board in the unfolded state.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a flexible display including a first display region, a second display region, and a third display region between the first display region and the second display region;
a first housing, below the first display region, supporting at least a portion of the first display region;
a second housing, below the second display region, supporting at least a portion of the second display region, and configured to be rotatable with respect to the first housing based on a folding axis;
a hinge structure, below the third display region, including a first hinge plate and a second hinge plate that are positioned along a boundary between the first housing and the second housing;
a stiffener, between the hinge structure and the third display region, supporting at least a portion of the third display region;
a flexible printed circuit board, FPCB, extending from a first printed circuit board, PCB, in the first housing, passing through the hinge structure, to a second PCB in the second housing; and
a protective layer, parallel to the boundary, surrounding a portion of the first hinge plate adjacent to the second hinge plate, in an unfolded state in which a first direction where the first display region faces and a second direction where the second display region faces correspond to each other,
wherein a rotation angle range of the first hinge plate and the second hinge plate is greater than a rotation angle range of the first housing and the second housing.

2. The electronic device of claim 1,
wherein the protective layer is configured to separate the first hinge plate from the stiffener and separate the first hinge plate from the FPCB, in a plurality of states comprising the unfolded state and a folded state in which the first direction and the second direction are opposite to each other.

3. The electronic device of any one of claims 1 or 2,
wherein the first hinge plate including:
a first surface facing the flexible display,
a second surface opposite to the first surface, and
a third surface, between the first surface and the second surface, facing the second hinge plate in the unfolded state, and
wherein the protective layer at least partially surrounds the first surface, the second surface, and the third surface.

4. The electronic device of claims 1 to 3,
wherein the protective layer includes:
a first portion attached to a first surface of the first hinge plate facing the flexible display, and
a second portion, protruding from a periphery facing the second hinge plate from among peripheries of the first portion, attached to a second surface of the first hinge plate opposite to the first surface and a third surface of the first hinge plate between the first surface and the second surface, the third surface of the first hinge plate facing the second hinge plate in the unfolded state.

5. The electronic device of any one of claims 1 to 4,
wherein the first portion is attached to the first surface,
wherein a portion of the second portion is attached to the third surface in a curved state with respect to the first portion, and
wherein a remaining portion of the second portion is attached to the second surface in a curved state with respect to the portion of the second portion.

6. The electronic device of any one of claims 1 to 5,
wherein a thickness of the first portion is thicker than a thickness of the second portion.

7. The electronic device of any one of claims 1 to 6,
wherein the second portion protrudes from a portion of the periphery of the first portion at a position corresponding to a region where the FPCB passes through the hinge structure.

8. The electronic device of any one of claims 1 to 7,
wherein the hinge structure further includes a hinge cover, between the first housing and the second housing, disposed below the first hinge plate and the second hinge plate, and
wherein the FPCB includes:
a first portion, in the unfolded state, curved from the first PCB toward the first hinge plate, extending in contact with the protective layer covering a surface of the first hinge plate facing the hinge cover,
a second portion, in the unfolded state, curved from the second PCB toward the second hinge plate, extending in contact with the protective layer covering a surface of the second hinge plate facing the hinge cover, and
a third portion, in the hinge cover, disposed between the first portion and the second portion.

9. The electronic device of any one of claims 1 to 8,
wherein the protective layer surrounds a surface of the hinge plate facing the hinge structure in the unfolded state, such that the protective layer is contacted with a portion of the first portion extending in contact with the protective layer surrounding the surface of the first hinge plate facing the hinge cover.

10. The electronic device of any one of claims 1 to 9,
wherein the stiffener is flat in the unfolded state, and
wherein the stiffener is curved in a folded state in which the first direction and the second direction are opposite each other.

11. The electronic device of any one of claims 1 to 10,
wherein the stiffener is attached to one of the first hinge plate and the second hinge plate.

12. The electronic device of any one of claims 1 to 11,
wherein the stiffener includes:
a first stiffener adjacent to the first housing of the first housing and the second housing, and
a second stiffener, spaced apart from the first stiffener, adjacent to the second housing of the first housing and the second housing.

13. The electronic device of any one of claims 1 to 12,
wherein the stiffener includes:
a first region where a gap between the first stiffener and the second stiffener corresponds to the folding axis,
a second region where the gap is spaced apart from the folding axis in a direction where the first housing is disposed, and
a third region where the gap is spaced apart from the folding axis in a direction where the second housing is disposed.

14. The electronic device of any one of claims 1 to 13,
wherein the hinge structure further includes a hinge bracket includes:
a first guide groove where the first hinge plate is slidably connected, and
a second guide groove where the second hinge plate is slidably connected.

15. The electronic device of any one of claims 1 to 14, further comprising a second protective layer different from a first protective layer corresponding to the protective layer,
wherein the second protective layer surrounds a portion of the second hinge plate, parallel to the boundary, adjacent to the first hinge plate, in the unfolded state.
